## Europäisches Patentamt

## European Patent Office

## Office européen des brevets

(19)

(11)  **EP 1 178 732 B1**

(12)  # FASCICULE DE BREVET EUROPEEN

(45) Date de publication et mention
de la délivrance du brevet:
**30.03.2005   Bulletin 2005/13**

(21) Numéro de dépôt: **00929641.9**

(22) Date de dépôt: **19.05.2000**

(51) Int Cl.⁷: **A23G 3/00**, A23G 1/00

(86) Numéro de dépôt international:
**PCT/FR2000/001368**

(87) Numéro de publication internationale:
**WO 2000/070959 (30.11.2000 Gazette 2000/48)**

(54) **PRODUIT ALIMENTAIRE COMPRENANT UNE MASSE SOLIDE A BASE DE CHOCOLAT OU ANALOGUE EN CONTACT AVEC UNE PHASE AQUEUSE**

NAHRUNGSMITTEL ENTHALTEND FESTSTOFFE AUF BASIS VON SCHOKOLADE ODER DERGLEICHEN DIE IN KONTAKT MIT EINER WÄSSERIGEN PHASE STEHEN

FOOD PRODUCT COMPRISING A SOLID MASS BASED ON CHOCOLATE OR THE LIKE IN CONTACT WITH AN AQUEOUS PHASE

(84) Etats contractants désignés:
**AT BE CH CY DE DK ES FI FR GB GR IE IT LI LU MC NL PT SE**

(30) Priorité: **21.05.1999  FR 9906480**

(43) Date de publication de la demande:
**13.02.2002   Bulletin 2002/07**

(73) Titulaire: **LU FRANCE en abrégé LF SA
91130 Ris Orangis (FR)**

(72) Inventeurs:
• **LOISEL, Christophe
F-91450 Soisy-sur-Seine (FR)**
• **RABAULT, Jean-Luc
F-91650 Breuillet (FR)**
• **WARIN, Françoise
F-92200 Bagneux (FR)**

(74) Mandataire: **Warcoin, Jacques et al
Cabinet Régimbeau
20, rue de Chazelles
75847 Paris cedex 17 (FR)**

(56) Documents cités:
**EP-A- 0 615 692        EP-A- 0 664 959
EP-A- 0 686 354        EP-A- 0 770 332
EP-A- 0 839 456        WO-A-97/15198
FR-A- 2 759 255        US-A- 4 888 187**

**Description**

La présente invention concerne un produit alimentaire comprenant une masse substantiellement solide à base de chocolat ou analogue de chocolat en contact avec un milieu humide à l'état non gelé, notamment non laitière, de teneur en eau libre locale comprise entre 30 et 45 %, de préférence 35 à 45%, ladite masse substantiellement solide présentant une faible reprise en eau dans les conditions de conservation appropriée. L'invention concerne donc des compositions pouvant être maintenues à température ambiante.

L'invention concerne plus particulièrement les produits alimentaires destinés à être conservés à température ambiante, à base de fruits ou d'autres bases sucrées ou lactées, éventuellement en présence d'épaississants et d'arômes, de teneur en eau libre locale de 30 à 45 %.

On connaît les barres alimentaires constituées d'un fourrage anhydre ou peu hydraté, enveloppé d'une coque de chocolat ou analogue de chocolat.

On connaît l'utilisation d'une couche de chocolat intercalée entre un fond de tarte ou une gaufrette et une garniture humide pour tenter d'empêcher l'eau contenue dans une garniture humide de migrer vers le fond de tarte ou la gaufrette. L'efficacité de cette barrière n'est en fait que de quelques heures. On constate alors que le chocolat a totalement perdu son caractère croquant.

On connaît les barres alimentaires constituées d'un fourrage enrobé d'une coque de chocolat ou analogue de chocolat.

On connaît les produits de pâtisserie, biscuiterie, viennoiserie comprenant une ou plusieurs pâtes. Celles-ci comprennent en outre :

- d'une part des morceaux ou fourrages ou nappages, à base de fruits (sous forme par exemple de marmelade, confitures, purée de fruits), ou à base d'autres ingrédients humides (par exemple des compositions à base de lait),
- et d'autre part du chocolat ou analogue sous forme d'une ou plusieurs couches, ou sous forme de pépites. Dans ces produits, contrairement à ceux de l'invention, la qualité du chocolat, ne peut être conservée que sous une ou plusieurs des conditions suivantes :

  * ils sont consommés seulement quelques jours après fabrication,
  * l'activité de l'eau du produit est très basse,
  * le produit est réfrigéré.

Dans le cas contraire, on constate une hydratation des masses solides de chocolat ou analogue qui conduit à plusieurs effets négatifs qui rendent le produit impropre à la consommation.

D'une part le chocolat ou analogue de chocolat étant un produit naturellement contaminé, son hydratation provoque le développement de bactéries qui contaminent la phase aqueuse ce qui est inadmissible en raison des normes de conservation exigées dans les pays industrialisés.

D'autre part, l'intérêt gustatif des masses solides de chocolat ou analogue de chocolat réside dans leur caractère « croquant » propre à cette substance. Une hydratation excessive (migration de l'eau à travers l'épaisseur du chocolat) provoque sa décoloration, sauf pour le chocolat blanc, et son ramollissement (déstructuration et perte de croquant) progressif par l'extérieur et conduit au rejet par le consommateur d'un tel produit alimentaire.

L'obtention d'un chocolat ou analogue de chocolat résistant à l'eau est donc d'un intérêt majeur pour le développement de produits alimentaires comprenant une phase dont la teneur libre locale en eau est significative, en contact avec une masse solide de chocolat ou analogue de chocolat.

Les chocolats conventionnels comme ceci est bien connu peuvent être répartis en trois catégories selon la teneur en cacao :

- chocolat noir 19 % environ de cacao sec et dégraissé,
- chocolat au lait 6 % environ de cacao sec et dégraissé,
- chocolat blanc 0 % de cacao sec et dégraissé.

Dans les chocolats au lait et blanc, une partie ou la totalité du cacao sec et dégraissé est remplacée par de la matière grasse laitière ou des particules de lait. La teneur en sucres normale des chocolats est de l'ordre de 25 à 57 %. Cependant, ces chocolats révèlent une reprise en eau trop importante pour les applications recherchées indiquées ci-dessus.

C'est pourquoi on a déjà proposé de modifier les compositions de chocolat ou analogue de chocolat afin de les adapter aux formes de réalisation précitées.

Le brevet EP 0 615 692 décrit un produit réfrigéré à base de lait contenant des morceaux de chocolat que l'on peut conserver pendant 5 à 6 semaines au réfrigérateur et dont les morceaux conservent bien leur intégrité pendant ce laps de temps.

Ce brevet indique que le taux de sucres est compris entre 1 et 10 % et de préférence entre 1 et 3 %. Cependant une telle réalisation conduit à des masses solides de chocolat ou analogue de chocolat présentant un goût amer qui peut rebuter certains consommateurs. De plus, afin de masquer le plus possible cette amertume, il est nécessaire de limiter la taille des particules de chocolat, notamment entre 1 et 4 mm.

La demande de brevet EP-A-770 332 décrit également un produit alimentaire dont une ou plusieurs couches sont constituées d'une masse solide cassable de chocolat. La couche de chocolat présente une épaisseur comprise entre 0,1 et 3 mm et une teneur en sucres inférieure à 17 %, de préférence entre 2 et 3 %. Selon ce document, une telle couche conserve le caractère croquant souhaité par le consommateur.

On remarquera que ce document présente un enseignement proche de la demande de brevet EP-A-615 692 dans la mesure où dans les deux cas, il est conseillé de minimiser la teneur en sucres ce qui conduit à des chocolats très déséquilibrés au niveau organoleptique (amer, non sucré, peu aromatique).

Les chocolats ainsi réalisés sont donc très déséquilibrés au niveau organoleptique (amers, non sucré, peu aromatiques).

Après des études systématiques, le déposant a mis en évidence que, contrairement aux enseignements décrits dans les documents cités précédemment, le caractère résistant à l'eau du chocolat n'était pas lié à la faible teneur en sucres. De ce fait, l'invention rompt avec le préjugé selon lequel le sucre est plus défavorable à la résistance à l'eau que le cacao. Par ailleurs, l'invention montre qu'il est possible de réaliser des chocolats résistants à l'eau dont le taux de matière grasse est inférieur à 68% et même de préférence inférieur à 65 %, ce qui évite une sensation grasse en bouche et une image nutritionnelle défavorable, tout en préservant un bon équilibre organoleptique.

Le déposant a trouvé qu'une composition de chocolat ou analogue de chocolat nouvelle sous la forme d'une masse solide permettait d'utiliser ladite masse de chocolat ou analogue de chocolat en association avec une phase aqueuse tout en conservant le caractère croquant recherché.

Ces masses solides dans la phase aqueuse peuvent être conservées à température ambiante pendant au moins deux semaines jusqu'à plus de cinq semaines, ce qui constitue la durée de conservation souhaitée pour ce type de composition alimentaire.

Par température ambiante, on entend généralement une température comprise entre 10 °C et la température de fusion de la matière grasse ou analogue de cacao. Ces masses solides se distinguent donc des produits de pâtisserie artisanaux.

De façon générale, l'invention est caractérisée en ce que la masse substantiellement solide de chocolat ou analogue de chocolat comprend en pourcentage en poids :

.    matière grasse        43 à 68 %
.    cacao sec et dégraissé       < 25 %
.    poudre de lait écrémé       < 17 %
.    une quantité appropriée de sucres        > 13 %

la masse solide étant telle que pour une phase aqueuse présentant une teneur en eau libre locale comprise entre 30 % et 45 %, de préférence 35-45 %, la grandeur ($\tau$) est inférieure à 3, la grandeur $\tau$ étant définie par l'égalité: $\tau$ = (- 16,6 $\times$ [eau] + 2,9) $\times$ MG + (22,5 $\times$ [eau] - 3,5) $\times$ (S + PLE) + (66,9 $\times$ [eau] - 11,8) $\times$ C avec :

-    [eau] est la teneur en eau libre locale de la phase humide en contact (en g/g),
-    MG est la teneur en matières grasses du chocolat ou équivalent (g/g),
-    S + PLE est la teneur en sucres + poudre de lait écrémé du chocolat ou équivalent (en %),
-    C est la teneur en cacao sec et dégraissé du chocolat ou équivalent.

La teneur en eau libre locale [eau libre locale] est définie par l'équation :

$$[\text{eau libre locale}] = [\text{eau totale}] \times A_{w\,25°C} \,/\, 100\text{-MG}$$

dans laquelle :

[eau libre locale] est donnée en grammes d'eau pour 100 grammes de produit
MG est donné en grammes de matières grasses pour 100 grammes de produit.

Pour un gel non gras à 42,6 % d'eau et d'$A_{W25°C}$ 0,85, la teneur en eau libre locale est de 36,2 %.

Selon une variante, la proportion de cacao sec et dégraissé et de poudre de lait écrémé est telle que leur somme soit inférieure à 25 % .

L'invention est donc définie notamment par un test décrit sous la forme d'une équation mathématique qui dispense l'homme du métier d'effectuer les expériences. Toutefois, en tant que de besoin on indique ci-après une procédure expérimentale permettant à l'homme du métier de déterminer les compositions qui satisfont aux objectifs que l'invention se propose d'atteindre.

On réalise, par exemple, le test qui consiste à mettre en contact des rondelles de chocolat d'épaisseur 1,5 ± 0,2 mm et de diamètre 20 mm au contact d'un gel d'agar d'une teneur en eau libre locale de 36 %. Les rondelles de chocolat sont obtenues après tempérage et refroidissement du chocolat à 13 °C, stockage 3 jours à 18 °C, puis 12 heures à 10 °C. Le gel est coulé dans des seringues coupées à leur extrémité puis recouvertes de la rondelle de chocolat puis refermées. On stocke l'ensemble pendant 35 jours à 25 °C et l'on mesure la reprise en eau de la rondelle de chocolat à J35 par la méthode « Karl Fischer » OICCC n° 105 (1988).

Les compositions qui satisfont aux critères de l'invention sont celles dont le pourcentage de reprise en eau après 35 jours de conservation à 25°C sera < à 17,7% ; le tableau ci-dessous donne une indication des pourcentages de reprise en eau après 35 jours à 25°C en fonction de la résistance à l'eau du chocolat (test réalisé après stabilisation à 18-20°C).

| % reprise en eau | Résistance à l'eau |
| --- | --- |
| > 17,7 | pas de résistance |
| 11,8 à 17,7 | moyenne résistance |
| 5,9 à 11,8 | bonne résistance |
| < 5,9 | très bonne résistance |

Ces masses substantiellement solides de chocolat ou analogue de chocolat présentent d'excellentes propriétés barrière à l'eau tout en conservant les qualités organoleptiques nécessaires pour la mise en oeuvre des produits alimentaires selon l'invention.

Dans le cas du chocolat au lait ou du chocolat blanc, une partie ou la totalité du cacao sec et dégraissé est remplacé par du lait en poudre écrémé ou non, tout en conservant bien entendu les proportions indiquées dans la définition générale de l'invention.

La composition de la masse substantiellement solide comprend selon une variante un émulsifiant, notamment la lécithine. La teneur en lécithine est de préférence inférieure à 1 % en poids par rapport à la masse solide. La composition de la masse substantiellement solide peut également comprendre des arômes.

Les sucres sont notamment les monosaccharides et les disaccharides. Parmi les monosaccharides on cite le fructose, le galactose, le glucose. Parmi les disaccharides, on cite notamment le saccharose qui est le sucre couramment utilisé pour la réalisation de chocolat mais le saccharose peut être remplacé partiellement ou totalement par un autre disaccharide tel que le lactose.

On a trouvé que le remplacement d'une partie du saccharose par un autre disaccharide du type lactose (à hauteur de 0 à 50 %) permettait d'obtenir des propriétés barrière du chocolat équivalentes vis-à-vis des phases aqueuses.

Dans le cas général, la matière grasse est le beurre de cacao. Il est néanmoins possible de remplacer jusqu'à 20 % du beurre de cacao par de la matière grasse laitière anhydre (MGLA) ou de remplacer tout ou partie du beurre de cacao par une ou plusieurs graisses végétales de SFC (en anglais "solid fat content") mesuré à 10 °C supérieur à 50 %.

Par analogue du chocolat, on entend toute masse grasse de confiserie contenant une phase grasse continue constituée d'une ou plusieurs matières grasses d'origine végétale ou animale et dont les propriétés sont similaires à celles du beurre de cacao. Ces masses grasses sont généralement appelées pâte à glacer ou compound.

L'invention est remarquable en ce que la masse solide de chocolat ou analogue de chocolat peut se présenter sous la forme de pépites ou grains, notamment d'une taille supérieure à 4 mm, ce qui permet aux consommateurs lorsque ces pépites sont incorporées dans une composition alimentaire, de reconnaître et d'apprécier le goût du chocolat et la sensation de croquant. En d'autres termes par l'expression « grains de chocolat ou analogue de chocolat », on entend des particules solides dont la granulométrie est suffisante pour leur conférer le goût de chocolat, caractéristique de cette substance.

Les pépites ou grains peuvent également être constitués de composés hydrophiles tels que biscuits, céréales, fruits secs enrobés d'une couche de masse solide de chocolat ou analogue de chocolat.

On remarquera également que le chocolat ou analogue de chocolat selon l'invention présente une teneur en sucres suffisante pour permettre d'éviter le goût amer inhérent au cacao.

L'invention est également remarquable en ce que la masse substantiellement solide peut se présenter sous la forme d'une coque enrobant partiellement ou totalement un fourrage aqueux. Du fait de son caractère résistant à l'eau, la masse solide de chocolat ou analogue de chocolat permet de conserver ledit fourrage le temps approprié sans perdre son caractère croquant. Il permet en outre d'éviter un dessèchement du fourrage.

La masse solide de chocolat ou analogue de chocolat peut aussi se présenter sous la forme d'une couche continue ou discontinue au contact d'une phase aqueuse ou d'une structure multicouche formée de couches séparées par des couches d'une phase aqueuse. La fonction de la masse solide de chocolat est également celle de couche barrière à l'eau. Elle permet d'éviter ou de limiter les transferts d'eau de la phase aqueuse vers les phases sèches à base par exemple de pâte ou de céréales.

De manière générale, on peut définir les réalisations obtenues à partir des masses solides de chocolat ou analogue de chocolat de la façon suivante :

- coque de masse solide enrobant un fourrage
- coque de masse solide enrobant un fourrage chargé en grains de masse solide,
- composition alimentaire formée d'une phase continue et chargée en grains de masse solide,
- composition alimentaire recouverte d'une couche supérieure continue ou discontinue de masse solide,
- structure multicouche comprenant une ou plusieurs couches continues ou discontinues de masse solide.

D'autres réalisations résultant de la combinaison d'une ou plusieurs de ces variantes sont également comprises dans la définition de l'invention.

La phase continue est de préférence constituée de préparations à base de fruits, de fourrage émulsionné ou aqueux, pâte de biscuit ou pâtisserie humidifiée.

Selon l'épaisseur de la masse solide de chocolat ou analogue de chocolat la valeur de τ ne devra pas dépasser une valeur limite pour assurer une résistance à l'eau et donc un croquant suffisant. Plus, l'épaisseur de la masse solide sera élevée, plus la valeur de τ limite pourra être élevée. C'est pourquoi, l'homme du métier sera à même de choisir la composition optimum de la masse solide en fonction de l'épaisseur souhaitée. De même, la valeur de τ devra être choisie en fonction de la durée de conservation. Plus la durée sera courte, plus cette valeur pourra être élevée. En général, avantageusement τ est inférieur à 2, de préférence inférieur à 1,6.

De plus, compte tenu de ce qui vient d'être exposé, dans le cas où la masse solide a une épaisseur inférieure à 1,5 mm, le produit alimentaire selon cette variante est caractérisé en ce que τ est inférieur ou égal à 2, de préférence inférieur à 1,6. Il est bien entendu que l'épaisseur s'entend par rapport à la distance de la zone la plus éloignée de la phase aqueuse. C'est à dire que si une rondelle de masse solide est en contact sur les deux faces avec la phase aqueuse, cette zone sera la zone médiane. S'il s'agit d'une pépite, la zone sera la zone centrale ou point central.

De préférence, le produit alimentaire est caractérisé en ce que la masse substantiellement solide comprend en pourcentage en poids:

- matière grasse        43 à 68 %, de préférence 43 à 65 %,
- cacao sec et dégraissé        0 à 19 %
- et/ou poudre de lait écrémé        0 à 17 %
- sucres en quantité appropriée

la somme des proportions de cacao sec et dégraissé et poudre de lait écrémé étant inférieure à 25 %.

La masse solide trouve une application particulièrement avantageuse en combinaison avec une base aqueuse telle que les préparations de fruits (confiture, purée de fruit) ou d'autres phases humides comestibles, telles qu'un fourrage aqueux.

Selon un mode général de réalisation, le produit alimentaire est caractérisé en ce que la masse solide à base de chocolat ou analogue de chocolat est sous forme de grains, d'une coque enrobant partiellement ou totalement un fourrage non laitier ou d'une couche continue déposée sur une composition non laitière.

Selon un mode de réalisation, le produit alimentaire est caractérisé en ce qu'il est formé d'une phase aqueuse continue, comprenant une composition non laitière chargée en grains ou pépites de chocolat ou analogue de chocolat.

Elle concerne également un fourrage comprenant une base laitière, éventuellement chargée en grains de chocolat ou analogue de chocolat, ledit fourrage étant enrobé dans une coque formée d'une masse substantiellement solide de chocolat ou analogue de chocolat telle que définie ci-dessus. L'épaisseur d'une telle enveloppe est généralement comprise entre 1 et 4 mm et l'enrobage peut être effectué par moulage traditionnel ou moulage-emboutissage comme ceci est décrit dans la demande de brevet WO 98/35566.

Selon un autre mode de réalisation le produit alimentaire est caractérisé en ce qu'il est constitué d'une barre alimentaire formée d'une coque en chocolat ou analogue de chocolat et d'un fourrage, éventuellement chargé en grains de chocolat ou analogue de chocolat.

Selon un autre mode de réalisation le produit alimentaire est caractérisé en ce qu'il est constitué d'une phase aqueuse continue, éventuellement chargée en grains de chocolat ou analogue de chocolat, ladite phase aqueuse étant recouverte à la surface par une couche continue ou discontinue d'une masse solide de chocolat ou analogue de chocolat.

Selon un autre mode de réalisation, elle concerne une structure multicouche formée de couches séparées d'une composition alimentaire humide et d'une ou plusieurs couches de masse solide de chocolat ou analogue de chocolat.

Les masses solides de chocolat ou analogue de chocolat décrites ci-dessus sont réalisées selon les méthodes traditionnelles connues dans l'art.

Les exemples ci-après illustrent l'invention.

Différentes compositions de chocolats noir et au lait, et d'un équivalent, ont été préparées de façon classique. Les chocolats contenaient tous 0,5 % de lécithine, émulsifiant couramment utilisé pour augmenter la fluidité du chocolat lors de sa fabrication. La lécithine est comptabilisée avec la matière grasse.

La matière grasse est soit le beurre de cacao, soit tout autre équivalent de beurre de cacao.

Les chocolats ont été fabriqués à partir de liqueur de cacao.

Exemples concernant des pépites de chocolat

Des pépites de chocolat sont incluses dans une phase continue aqueuse d'eau libre locale 45 %.

Le chocolat est tempéré et cristallisé en pépites (environ sphériques, diamètre = 3 mm) directement en surface de la phase aqueuse ; puis on recouvre d'une seconde couche de phase aqueuse.

Le produit est stocké à 25°C/30 jours.

Une composition a été étudiée (mélange de sucres, pâte de cacao et beurre de cacao ; 0,5 % de lécithine, inclus dans la matière grasse). Elles est présentée au tableau ci-après en même temps que sa reprise en eau après 30 jours.

| x. | % MG | % CSD | % S | CSD/S | ELL | τ | % eau |
|---|---|---|---|---|---|---|---|
| 1 | 65 % | 8 % | 27 % | 0,3 | 45 | 0,3 | < 5 |
| ELL = Eau Libre Locale | | | | | | | |
| % eau = eau moyenne mesurée (J30). | | | | | | | |

Le chocolat de l'exemple 1 présente une excellente résistance pour une teneur en eau libre locale de 45 %.

Exemples relatifs à des milieux aqueux de teneur en eau libre locale de 36 %

Essais de reprise d'humidité pour une phase aqueuse de teneur en eau libre locale de 36 %.

Les compositions suivantes de masse solide ont été réalisées en procédant selon les méthodes classiques de préparation du chocolat.

Les mesures sont effectuées selon le test suivant :

Les rondelles de chocolat ont été obtenues par moulage dans des moules. La cristallisation du chocolat est assurée après deux passages de 8 minutes dans un tunnel de froid à 13°C. Après démoulage, les rondelles de chocolat sont conservées 3 jours à 18°C afin de terminer leur cristallisation.

Les résultats sont exprimés en % d'eau repris par le chocolat (épaisseur = 1.5 ± 0,2 mm) après 28 jours de contact à 25°C avec un gel d'agar d'humidité 42 % et d'aw = 0.85 (teneur en eau libre locale = 36,2 %) (cf tableaux ci-après).

## TABLEAU RECAPITULATIF DES PROPRIETES BARRIERE DE DIFFERENTS CHOCOLATS

## EN FONCTION DE LEURS COMPOSITIONS

| Exemples | Matières grasses | Sucres | Cacao dégraissé | τ calculé d'après l'équation | Résultats expérimentaux des teneurs en eau des chocolats conservés 28 Jours à 25°C | CSD/S |
|---|---|---|---|---|---|---|
| 2 | 50 | 20 | 30 | 3.1 | 13 % | 1,5 |
| 3 | 50 | 35 | 15 | 1.9 | 10 % | 0,43 |
| 4 | 50 | 47 | 3 | 1.0 | 5 % | 0,06 |
| 5 | 50 | 50 | 0 | 0.8 | 2.8 % | 0 |
| 6 | 31 | 55 | 14 | 3.3 | 16.5 % | 0,25 |
| 7 | 31 | 46 | 23 | 4.0 | 20 % | 0,5 |

## COMPOSITION DU GEL AGAR

| | 0,85 |
|---|---|
| Eau | 41,5 |
| Saccharose | 41,5 |
| Dextrose monohydrate | 6,9 % |
| glycérol | 8,3 % |
| agar | 1,5 % |
| sorbate de potassium | 0,3 % |
| total | 100 |
| $[H_2O]_{gel}$ | 42,6 % |

EP 1 178 732 B1

Ces résultats montrent l'effet néfaste du cacao dégraissé sur les propriétés barrière du chocolat, et ceci même à teneur en matière grasse constante. Ces résultats confirment qu'une augmentation de la matière grasse de 31 % à 50 % améliore très significativement la résistance du chocolat aux transferts d'eau mais, que ce facteur (% de matière grasse totale) n'est pas à lui seul suffisant puisqu'un chocolat à 50 % de matière grasse peut présenter un résultat proche de celui d'un chocolat contenant seulement 31 % de matière grasse.

Il y a donc tout intérêt à développer des formules réduites en matières grasses et réduites en cacao pour des raisons de coûts, de qualité nutritionnelle, (dans la limite des contraintes organoleptiques souhaitées).

Les exemples suivants décrivent une phase aqueuse enrobée d'une coque de chocolat.

L'utilisation de préparation de fruits riches en eau est très appréciée lorsque l'on recherche des contrastes de textures entre le chocolat et le fruit ou lorsqu'on recherche un goût de fruits frais.

Un exemple d'application est la fabrication d'un produit moulé en chocolat (ou équivalent) dont l'épaisseur est de 1,3 ± 0, 2 mm contenant un intérieur riche en eau et conservées à température ambiante. Cet intérieur humide peut être une préparation de fruit (confiture, purée de fruit) ou toute autre phase humide comestible (fourrage aqueux, etc.).

Des essais en laboratoire ont permis de comparer la résistance à l'eau de 4 formulations de chocolat mise en contact avec une confiture comme décrite dans le tableau ci-après :

| Caractéristiques de la confiture | |
|---|---|
| Brix | 58 % |
| Teneur en eau | 42 % |
| Aw (Exemple) | 0.9 |

Des essais en laboratoire sur une telle réalisation ont montré que les propriétés barrière du chocolat dépendent non seulement de sa teneur en matière grasse mais également de sa teneur en cacao (comme revendiqué dans ce brevet).

Pour cela, quatre formulations de chocolats plus ou moins riches en matière grasse (31,5 % à 50 %) et plus ou moins riches en cacao (10 % à 30 %) ont servi à la fabrication de produits moulés en chocolat contenant de la confiture. Les compositions de ces quatre chocolats sont décrites dans le tableau suivant :

| Composition du chocolat | | | | |
|---|---|---|---|---|
| Exemples | 8 | 9 | 10 | 11 |
| Beurre de cacao % | 31,5 | 60 | 60 % | 60 |
| Saccharose % | 52,7 | 30 | 20 % | 10 |
| Cacao dégraissé % | 15,8 | 10 | 20 % | 30 |
| $\tau$ (selon l'équation 2) | 3,7 | 0.8 | 1,7% | 2,5 |
| CSD/S | 0,3 | 0,3 | 0,5 % | 3 |

Les caractéristiques de la confiture utilisée et placée à l'intérieur de ces produits moulés sont décrites dans le tableau suivant :

| Caractéristiques de la confiture | |
|---|---|
| Teneur en eau | 42 % |
| Aw (exemple) | 0,9 |
| % Eau locale | 38 % |
| Brix | 58 % |

Après 4 semaines de conservation à 25°C, le chocolat de l'exemple 8 a repris plus de 16,5 % d'eau ($\tau > 3$) et présente un fort ramollissement avec de nombreuses fissures sur les contours du chocolat. Avec le chocolat de l'exemple 9, la conservation du croquant est sensiblement améliorée et le chocolat présente environ 6 % d'eau après 4 semaines à 25°C. Avec les chocolats des exemples 10 et 11, les chocolats présentent une diminution du croquant et ceci d'autant plus que le chocolat est riche en cacao.

Ces quatre exemples montrent que les propriétés barrière du chocolat à l'eau ne dépendent pas seulement de la teneur en matière grasse du chocolat mais d'un juste équilibre entre teneur en matière grasse et teneur en cacao dégraissé.

Exemple relatif à un milieu aqueux de teneur en eau libre locale de 42 %

Si la confiture (ou toute autre phase humide) contient une teneur en eau libre locale supérieure à l'exemple précédent (ex. 42 %), les propriétés barrière devront être encore augmentée afin de conserver un croquant satisfaisant (moins de 11 % d'eau et si possible moins de 5.5 % d'eau). Dans ce cas, le tableau ci-après décrit la composition d'un chocolat présentant des propriétés barrière suffisantes pour une application à 25°C pendant 4 semaines.

La composition de chocolat reprenant moins de 11 % d'eau après 4 semaines à 25°C avec une confiture riche en eau (teneur en eau libre locale = 42%) est donnée ci-après :

| Exemple | 12 |
|---|---|
| Beurre de cacao | 65 |
| Saccharose | 24 |
| Cacao sec et dégraissé | 11 |
| $\tau$ calculé | 0,7 |
| CSD/S | 0,45 |

**Revendications**

1. Produit alimentaire comprenant une masse substantiellement solide à base de chocolat ou analogue de chocolat en contact avec une phase aqueuse à l'état non gelé, de teneur en eau libre locale comprise entre 30 et 45 %, de préférence 35 à 45%, ladite masse substantiellement solide présentant une faible reprise en eau dans les conditions de conservation appropriée, **caractérisé en ce que** la masse substantiellement solide comprend en pourcentage en poids :

   .   matière grasse        43 à 68 %
   .   cacao sec et dégraissé        < 25 %
   .   poudre de lait écrémé        < 17 %
   .   une quantité appropriée de sucres        > 13 %

   la masse solide étant telle que pour une phase aqueuse présentant une teneur en eau libre locale comprise entre 30 % et 45%, de préférence 35 à 45 %, la grandeur ($\tau$) est inférieure à 3, la grandeur $\tau$ étant définie par l'égalité :

$$\tau = (- 16,6 \times [\text{eau}] + 2,9) \times MG + (22,5 \times [\text{eau}] - 3,5) \times (S + PLE) + (66,9 \times [\text{eau}] - 11,8) \times C$$

   avec :

   - [eau] est la teneur en eau libre locale de la phase humide en contact (en g/g).
   - MG est la teneur en matières grasses du chocolat ou équivalent (g/g),
   - S + PLE est la teneur en sucres + poudre de lait écrémé du chocolat ou équivalent (en %),
   - C est la teneur en cacao sec et dégraissé du chocolat ou équivalent.

2. Produit alimentaire selon la revendication 1, **caractérisé en ce que** $\tau$ est inférieur ou égal à 2, de préférence inférieur à 1,6.

3. Produit alimentaire selon l'une des revendications 1 ou 2, **caractérisé en ce que** la masse substantiellement solide comprend en pourcentage en poids:

- matière grasse      43 à 68 %
- cacao sec et dégraissé      0 à 19 %
- poudre de lait écrémé      0 à 17 %
- quantité appropriée de sucres

la proportion de cacao sec et dégraissé et de poudre de lait écrémé étant telle que leur somme soit inférieure à 25 % et le rapport en poids cacao sec et dégraissé/sucres et éventuellement poudre de lait écrémé étant inférieur à 1,2.

4. Produit alimentaire selon l'une des revendications 1 à 3, **caractérisé en ce que** le rapport en poids cacao sec et dégraissé/sucres et éventuellement poudre de lait écrémé est compris entre 0 et 0,5.

5. Produit alimentaire selon l'une des revendications 1 à 4, **caractérisé en ce que** la phase aqueuse présentant une teneur en eau libre locale comprise entre 30 et 45%, de préférence 35 à 45 %, est une phase continue.

6. Produit alimentaire selon l'une des revendications 1 à 5, **caractérisé en ce que** la masse solide à base de chocolat ou analogue de chocolat est sous forme de grains ou d'une coque enrobant partiellement ou totalement un fourrage ou d'une couche continue déposée sur une composition présentant une phase aqueuse continue.

7. Produit alimentaire selon la revendication 6, **caractérisé en ce qu'**il est formé d'une phase aqueuse continue, chargée en grains de chocolat ou analogue de chocolat.

8. Produit alimentaire selon la revendication 6, **caractérisé en ce qu'**il est constitué d'une barre alimentaire formée d'une coque en chocolat ou analogue de chocolat et d'un fourrage humide, éventuellement chargé en grains de chocolat ou analogue de chocolat.

9. Produit alimentaire selon la revendication 6, **caractérisé en ce qu'**il est constitué d'une phase aqueuse continue, éventuellement chargée en grains de chocolat ou analogue de chocolat, ladite phase aqueuse étant recouverte à la surface par une couche continue ou discontinue d'une masse solide de chocolat ou analogue de chocolat.

10. Produit alimentaire selon la revendication 6, **caractérisé en ce qu'**il est constitué d'une structure multicouche formée de couches séparées d'une composition alimentaire humide et d'une ou plusieurs couches de masse solide de chocolat ou analogue de chocolat.

11. Produit alimentaire selon l'une des revendications précédentes **caractérisé en ce que** la matière grasse est choisie dans le groupe constitué par le beurre de cacao, la matière grasse laitière anhydre (MGLA), les huiles végétales, seuls ou en mélange.

12. Produit alimentaire selon la revendication 11, **caractérisé en ce que** la matière grasse comprend 80 à 100 % de beurre de cacao et 0 à 20 % de matière grasse laitière anhydre.

13. Produit alimentaire selon l'une des revendications précédentes, **caractérisé en ce que** le sucre est choisi parmi les disaccharides ou les monosaccharides tels que le saccharose, le lactose ou le fructose seuls ou en mélange.

14. Produit alimentaire selon la revendication 13, **caractérisé en ce que** le disaccharide comprend 50 à 100 % de saccharose et 0 à 50 % de lactose.

**Patentansprüche**

1. Nahrungsmittel, umfassend eine im Wesentlichen feste Masse auf der Grundlage von Schokolade oder einer Schokoladen-Entsprechung in Kontakt mit einer wässrigen Phase in nicht geliertem Zustand mit einem Gehalt an lokalem freiem Wasser zwischen 30 und 45 % einschließlich, bevorzugt von 35 bis 45 %, wobei die im Wesentlichen feste Masse unter Bedingungen der geeigneten Aufbewahrung eine geringe Wasseraufnahme zeigt, **dadurch gekennzeichnet, dass** die im Wesentlichen feste Masse in Gewichtsprozent umfasst:

. Fett      43 bis 68 %

. trockenen und entfetteten Kakao     < 25 %

. Magermilchpulver     < 17 %

. eine geeignete Menge an Zuckern     > 13 %

wobei die feste Masse derart ist, dass bei einer wässrigen Phase, die einen Gehalt an lokalem freiem Wasser zwischen 30 % bis 45 % einschließlich, bevorzugt von 35 bis 45 % aufweist, die Größe (τ) unterhalb von 3 liegt, wobei die Größe τ durch die Gleichung definiert ist:

$$\tau = (-16,6 \times [\text{Wasser}] + 2,9) \times F + (22,5 \times [\text{Wasser}] - 3,5) \times (Z + MMP) +$$

$$(66,9 \times [\text{Wasser}] - 11,8) \times K,$$

mit:

- [Wasser] ist der Gehalt an lokalem freiem Wasser der feuchten Phase in Kontakt (in g/g),
- F ist der Gehalt an Fett der Schokolade oder der Entsprechung (g/g),
- Z + MMP ist der Gehalt an Zuckern + Magermiichpulver der Schokolade oder Entsprechung (in %),
- K ist der Gehalt an trockenem und entfettetem Kakao der Schokolade oder Entsprechung.

2. Nahrungsmittel nach Anspruch 1, **dadurch gekennzeichnet, dass** τ weniger als oder gleich 2, bevorzugt weniger als 1,6 ist.

3. Nahrungsmittel nach Anspruch 1 oder 2, **dadurch gekennzeichnet, dass** die im Wesentlichen feste Masse in Gewichtsprozent umfasst:

. Fett      43 bis 68 %

. trockenen und entfetteten Kakao     0 bis 19 %

. Magermilchpulver     0 bis 17 %

. geeignete Menge an Zuckern

wobei der Anteil an trockenem und entfettetem Kakao und Magermilchpulver derart ist, dass ihre Summe weniger als 25 % beträgt und das Gewichtsverhältnis trockener und entfetteter Kakao/Zucker und gegebenenfalls Magermilchpulver unter 1,2 liegt.

4. Nahrungsmittel nach einem der Ansprüche 1 bis 3, **dadurch gekennzeichnet, dass** das Gewichtsverhältnis trokkener und entfetteter Kakao/Zucker und gegebenenfalls Magermilchpulver zwischen 0 und 0,5 einschließlich liegt.

5. Nahrungsmittel nach einem der Ansprüche 1 bis 4, **dadurch gekennzeichnet, dass** die wässrige Phase, die einen Gehalt an lokalem freiem Wasser zwischen 30 und 45 % einschließlich, bevorzugt von 35 bis 45 % aufweist, eine kontinuierliche Phase ist.

6. Nahrungsmittel nach einem der Ansprüche 1 bis 5, **dadurch gekennzeichnet, dass** die feste Masse auf der Grundlage von Schokolade oder einer Schokoladen-Entsprechung in Form von Körnern oder einer Schale, die teilweise oder vollständig eine Füllung umhüllt, oder einer zusammenhängenden Schicht vorliegt, die auf einer Zusammensetzung, die eine kontinuierliche wässrige Phase aufweist, abgeschieden ist.

7. Nahrungsmittel nach Anspruch 6, **dadurch gekennzeichnet, dass** es aus einer kontinuierlichen wässrigen Phase gebildet ist, die mit Körnern aus Schokolade oder einer Schokoladen-Entsprechung gefüllt ist.

8. Nahrungsmittel nach Anspruch 6, **dadurch gekennzeichnet, dass** es aus einem Nahrungsriegel besteht, der aus einer Schale aus Schokolade oder einer Entsprechung von Schokolade und einer feuchten Füllung gebildet ist, die gegebenenfalls mit Körnern aus Schokolade oder einer Schokoladen-Entsprechung gefüllt ist.

9. Nahrungsmittel nach Anspruch 6, **dadurch gekennzeichnet, dass** es aus einer kontinuierlichen wässrigen Phase zusammengesetzt ist, welche gegebenenfalls mit Körnern aus Schokolade oder einer Schokoladen-Entsprechung gefüllt ist, wobei die wässrige Phase an der Oberfläche mit einer zusammenhängenden oder unzusammenhängenden Schicht aus einer festen Masse aus Schokolade oder einer Schokoladen-Entsprechung bedeckt ist.

10. Nahrungsmittel nach Anspruch 6, **dadurch gekennzeichnet, dass** es aus einer mehrschichtigen Struktur aufgebaut ist, die aus getrennten Schichten einer feuchten Nahrungsmittelzusammensetzung und einer oder mehreren Schichten aus einer festen Masse aus Schokolade oder einer Schokoladen-Entsprechung gebildet ist.

11. Nahrungsmittel nach einem der vorangehenden Ansprüche, **dadurch gekennzeichnet, dass** das Fett aus der Gruppe ausgewählt ist, die aus Kakaobutter, wasserfreiem Milchfett (WFMF), Pflanzenölen, allein oder in Mischung, besteht.

12. Nahrungsmittel nach Anspruch 11, **dadurch gekennzeichnet, dass** das Fett 80 bis 100 % Kakaobutter und 0 bis 20 % wasserfreies Milchfett umfasst.

13. Nahrungsmittel nach einem der vorangehenden Ansprüche, **dadurch gekennzeichnet, dass** der Zucker aus Disacchariden oder Monosacchariden, wie Saccharose, Lactose oder Fructose, allein oder in Mischung, ausgewählt ist.

14. Nahrungsmittel nach Anspruch 13, **dadurch gekennzeichnet, dass** das Disaccharid 50 bis 100 % Saccharose und 0 bis 50 % Lactose umfasst.

**Claims**

1. Food product comprising a substantially solid mass based on chocolate or a chocolate-like product in contact with an aqueous phase in the non-gelled state, having a local free water content of between 30 and 45%, preferably. 35 to 45%, said substantially solid mass having a low water uptake under appropriate preservation conditions, **characterized in that** the substantially solid mass comprises, as a percentage by weight:

   . fat        43 to 68%
   . dry and defatted cocoa      < 25%
   . skimmed milk powder      < 17%
   . an appropriate quantity of sugars      > 13%

   the solid mass being such that for an aqueous phase having a local free water content of between 30% and 45%, preferably 35-45%, the parameter ($\tau$) is less than 3, the parameter $\tau$ being defined by the equation:

   $$\tau = (-16.6 \times [water] + 2.9) \times F + (22.5 \times [water]$$

   $$- 3.5) \times (S + SMP) + (66.9 \times [water] - 11.8) \times C$$

   with:

   - [water] is the local free water content of the moist phase in contact (in g/g),
   - F is the fat content of the chocolate or equivalent (g/g),
   - S + SMP is the content of sugars + skimmed milk powder in the chocolate or equivalent (in %),
   - C is the dry and defatted cocoa content of the chocolate or equivalent.

2. Food product according to Claim 1, **characterized in that** $\tau$ is less than or equal to 2, preferably less than 1.6.

3. Food product according to either of Claims 1 and 2, **characterized in that** the substantially solid mass comprises, as a percentage by weight:

   . fat        43 to 68%
   . dry and defatted cocoa      0 to 19%
   . skimmed milk powder      0 to 17%
   . sugars in appropriate quantity

the proportion of dry and defatted cocoa and of skimmed milk powder being such that their sum is less than 25% and the dry and defatted cocoa/sugar and optionally skimmed milk powder weight ratio being less than 1.2.

4. Food product according to one of Claims 1 to 3, **characterized in that** the dry and defatted cacao/sugar and optionally skimmed milk powder weight ratio is between 0 and 0.5.

5. Food product according to one of Claims 1 to 4, **characterized in that** the aqueous phase having a local free water content of between 30 and 45%, preferably 35 to 45%, is a continuous phase.

6. Food product according to one of Claims 1 to 5, **characterized in that** the solid mass based on chocolate or a chocolate-like product is in the form of grains or of a shell partially or completely coating a filling or of a continuous layer deposited on a composition having a continuous aqueous phase.

7. Food product according to Claim 6, **characterized in that** it consists of a continuous aqueous phase, loaded with grains of chocolate or a chocolate-like product.

8. Food product according to Claim 6, **characterized in that** it consists of a food bar consisting of a shell made of chocolate or a chocolate-like product and a moist filling, optionally loaded with grains of chocolate or a chocolate-like product.

9. Food product according to Claim 6, **characterized in that** it consists of a continuous aqueous phase, optionally loaded with grains of chocolate or a chocolate-like product, said aqueous phase being covered at the surface with a continuous or discontinuous layer of a solid mass of chocolate or a chocolate-like product.

10. Food product according to Claim 6, **characterized in that** it consists of a multilayer structure consisting of layers separated by a moist food composition and one or more layers of solid mass of chocolate or a chocolate-like product.

11. Food product according to one of the preceding claims, **characterized in that** the fat is chosen from the group consisting of cocoa butter, anhydrous milk fat (AMF), vegetable oils, alone or in the form of a mixture.

12. Food product according to Claim 11, **characterized in that** the fat comprises 80 to 100% cocoa butter and 0 to 20% anhydrous milk fat.

13. Food product according to one of the preceding claims, **characterized in that** the sugar is chosen from disaccharides or monosaccharides such as sucrose, lactose or fructose, alone or in the form of a mixture.

14. Food product according to Claim 13, **characterized in that** the disaccharide comprises 50 to 100% of sucrose and 0 to 50% of lactose.